# EUROPÄISCHE PATENTANMELDUNG

(11) **EP 1 423 999 A1**
(43) Veröffentlichungstag der Anmeldung: **02.06.2004**
(21) Anmeldenummer: 03026399.0
(22) Anmeldetag: 19.11.2003
(51) Int. Cl.: A01B 61/04, A01D 34/86

(54) **Halterung, Arbeitsgerät bzw. Fahrzeug**

(30) Priorität: 26.11.2002 DE 10254953
(71) Anmelder: DEERE & COMPANY, Moline, Illinois 61265-8098 (US)
(72) Erfinder: Biziorek, Stephane, 70600 Champlitte (FR); Guiet, Lionel, 70100 Gray (FR)
(74) Vertreter: Magin, Ludwig Bernhard

(57) **Zusammenfassung**

Es wird eine Halterung (18) mit einem Tragarm (22), mittels dem eine Arbeitseinheit (20) mit einem Fahrzeug (10) verbunden werden kann, und einem Sicherungsmittel (42, 60, 76) vorgeschlagen, welches eine Bewegung der Arbeitseinheit (20) beschränkt, solange eine vorgegebene Bedingung nicht erfüllt ist. Die Arbeitseinheit (20) ist an dem Tragarm (22) derart anschließbar, dass die Arbeitseinheit (20) mit Bezug auf den Tragarm (22) um wenigstens eine zumindest eine vertikale Komponente aufweisende Achse, welche in einem zumindest im Wesentlichen zentralen Bereich (26) der Arbeitseinheit (20) angeordnet ist, schwenken kann, wenn das Sicherungsmittel (42, 60, 76) die Verbindung freigibt. Darüber hinaus wird ein Arbeitsgerät (12) mit einer solchen Halterung (18) sowie ein Fahrzeug (10) mit einem Arbeitsgerät (12) vorgeschlagen.

## Beschreibung

Die Erfindung betrifft eine Halterung mit einem Tragarm, zur Verbindung einer Arbeitseinheit mit einem Fahrzeug, und wenigstens einem Sicherungsmittel, welches eine Bewegung der Arbeitseinheit beschränkt, solange eine vorgegebene Bedingung nicht erfüllt ist, sowie ein Arbeitsgerät mit einer solchen Halterung und ein Fahrzeug.

Die DE-A-749 281 zeigt ein Schneidwerk, welches an einem Schlepper mittels einer Verriegelungsvorrichtung gehalten wird, welche sich bei einem Auftreffen auf ein Hindernis löst, indem sie sich ausklinkt. Das Schneidwerk schwenkt dann um einen senkrechten Zapfen waagerecht nach rückwärts.

Die CH-A5-674 440 zeigt eine Vorrichtung zur Befestigung eines Mähwerks an einem Fahrzeug. Diese Vorrichtung ist mit einem Gelenkscharnier versehen, welches einen Abscherbolzen aufweist. Dieser Abscherbolzen kann bei einem Auftreffen des Mähwerks auf ein Hindernis brechen, worauf das Mähwerk um eine vertikale Achse nach rückwärts verschwenken kann.

Das der Erfindung zugrunde liegende Problem wird darin gesehen, dass derartige Halterungen nur ein Ausweichen einer Arbeitseinheit nach rückwärts erlauben und daher insbesondere für in Seitenbereichen eines Fahrzeugs angeordnete Arbeitseinheiten ungeeignet sind; insbesondere da bei einer derartigen Bewegung ein verhältnismäßig großer Raum überstrichen wird und es zu Kollisionen mit weiteren Hindernissen oder auch bei einer dementsprechenden Anordnung mit Rädern eines Fahrzeugs kommen kann.

Dieses Problem wird erfindungsgemäß durch die Lehre der Patentansprüche 1, 10 bzw. 13 gelöst, wobei in den weiteren Patentansprüchen Merkmale aufgeführt sind, die die Lösung in vorteilhafter Weise weiterentwickeln.

Auf diese Weise wird eine Halterung zur Verfügung gestellt, durch die eine Arbeitseinheit mit einem Fahrzeug ausweichbar verbunden werden kann. Da die Achse zumindest eine vertikale Komponente aufweist, also sowohl geneigt als auch vertikal ausgerichtet sein kann, kann die Arbeitseinheit mit ihren Seitenbereichen bei einem Auftreffen auf ein Hindernis nicht nur nach rückwärts, sondern sowohl nach vorn als auch nach rückwärts verschwenken. Die Arbeitseinheit benötigt zur Ausführung einer derartigen Bewegung nur einen verhältnismäßig geringen Freiraum, wodurch die Gefahr einer Kollision mit Bauteilen, wie beispielsweise Rädern, eines Trägerfahrzeugs oder anderen Hindernissen verringert wird.

Das Sicherungsmittel kann die Arbeitseinheit in kraft- und/oder formschlüssiger Weise lösbar gegen ein Verschwenken sichern. Ein Formschluss kann beispielsweise durch ein oder mehrere Scherelement(e), beispielsweise in der Art eines Scherbolzens erzielt werden. Es ist aber auch die Verwendung eines oder mehrerer Klinkenmechanismen denkbar. Derartige Klinkenmechanismen können beispielsweise von einer oder mehreren Feder(n) oder ähnlich wirkende Mittel belastet sein. Sowohl durch ein Scherelement als auch durch einen vorgespannten oder belasteten Mechanismus kann eine vorbestimmte maximal auf die Anbaueinheit einwirkende Kraft bestimmt werden. Wird diese Kraft überschritten, so schert das Scherelement ab oder es wird die den Klinkenmechanismus belastende Kraft aufgehoben, so dass die Arbeitseinheit freigegeben wird. Es ist auch denkbar, einen derartigen Klinkenmechanismus oder auch einen anderen Festlegemechanismus, beispielsweise in der Art eines beweglichen Sicherungsbolzens o.ä., elektrisch oder mechanisch zu belasten oder zu betätigen, so dass eine Betätigung auch in Abhängigkeit von einem Näherungs- oder Berührungsschalter oder - element (siehe unten) erfolgen kann. Ein Kraftschluss kann beispielsweise durch Reibelemente erzielt werden, welche eine Bewegung der Arbeitseinheit bei Überschreiten einer vorbestimmten Kraft auf die Arbeitseinheit erlauben. Es kann aber beispielsweise auch ein Elektromagnet vorgesehen sein, welcher die Arbeitseinheit in aktiviertem Zustand festlegt und in deaktiviertem Zustand freigibt. Ein derartiger Elektromagnet kann beispielsweise durch das Signal eines optischen, mechanischen oder anderweitig ausgeführten Näherungs- oder Berührungsschalters aktiviert oder deaktiviert werden.

Handelt es sich bei der Bedingung um eine Kraft, welche maximal auf die Arbeitseinheit wirkt, so kann diese derart gewählt werden, dass sichergestellt wird, dass sie nicht zu einer Beschädigung der Arbeitseinheit oder anderer mit ihr zusammenwirkender Bauteile führen kann. Handelt es sich um einen nicht zu unterschreitenden Abstand, so kann die Arbeitseinheit bereits im Vorfeld einer Berührung bzw. eines Zusammenstoßes mit einem Hindernis freigegeben und somit vor einer erhöhten Belastung geschützt werden.

Die Halterung greift an der Arbeitseinheit derart an, dass diese nach Freigabe durch das Sicherungsmittel rotieren kann. Darüber hinaus kann vorgesehen sein, dass die Halterung lösbar an der Arbeitseinheit angreifen kann, so dass sich die Arbeitseinheit beispielsweise bei einem frontalen Auftreffen oder bei einem Überschreiten einer weiteren Maximalkraft o.ä. von der Halterung bzw. dem Tragarm lösen kann.

Die Arbeitseinheit kann von der Halterung auch verschiebbar aufgenommen werden, so dass neben einer Drehbewegung eine translatorische Bewegung und somit ein vergrößerter Ausweichbereich der Arbeitseinheit ermöglicht wird.

Eine verschiebbare Aufnahme der Arbeitseinheit mittels der Halterung kann in einfacher Weise durch ein Vorsehen eines Schlitzes erzielt werden, in welchem ein Zapfen derart geführt wird, dass er in axialer Richtung nicht aus dem Schlitz austreten kann. Der Schlitz kann entweder an der Arbeitseinheit oder auch direkt oder indirekt an dem Tragarm vorgesehen sein. Ist der Schlitz einenends offen ausgebildet, so wird eine lösbare Verbindung ermöglicht, indem der Bolzen aus dem Schlitz bei Überbelastung oder frontalem Auftreffen auf ein Hindernis aus diesem austreten kann.

Eine axiale Sicherung des Bolzens in dem Schlitz kann in einfacher Weise erzielt werden, indem der Bolzen einen vergrößerten Kopfbereich aufweist, welcher die Ausdehnung des Schlitzes überschreitet, oder mit einem derart ausgebildeten Sicherungsmittel versehen ist. Auf diese Weise wird der Bolzen in dem Schlitz schienenartig geführt.

Es kann vorgesehen sein, dass die Arbeitseinheit um wenigstens eine zumindest im Wesentlichen horizontale Achse schwenken kann. Auf diese Weise kann die Arbeitseinheit der Kontur des Untergrundes folgen.

Ist der Tragarm zweiteilig ausgebildet, so kann die zumindest eine vertikale Komponente aufweisende Achse durch eine Schwenkachse eines Scharniers, welches diese zwei Teile schwenkbar verbindet, gebildet werden. Das Sicherungsmittel kann hierbei vorzugsweise ein Schwenken des Scharniers unterbinden. Hierzu kann das Sicherungsmittel als ein Scherbolzen ausgebildet sein; andere Ausführungsformen (siehe vorstehende Ausführungen) sind aber ebenso möglich.

Eine derartige Halterung kann mit einer Arbeitseinheit ein Arbeitsgerät bilden, wobei die Arbeitseinheit über die Halterung bzw. den Tragarm an ein Fahrzeug angeschlossen werden kann. Bei der Arbeitseinheit kann es sich beispielsweise um ein Mähwerk, wie ein Sichelmähwerk oder ein Spindelmähwerk, ein Mulchgerät, einen Knick- oder Schlagzetter, einen Mähknick- bzw. Mähschlagzetter oder auch um einen Mähbalken handeln. Auch andere insbesondere gezogene, geschobene oder angehängte insbesondere landwirtschaftliche Geräte oder Geräte zur Rasen-, Garten- und Grundstückspflege sind denkbar. Bei dem Fahrzeug kann es sich um einen Traktor, einen Feldhäcksler, ein Raupenfahrzeug oder jedes andere geeignete Trägerfahrzeug handeln.

Das Arbeitsgerät kann mit einem Annäherungs- oder Berührungssensor ausgestattet sein, welcher mit dem Sicherungsmittel derart zusammenwirkt, dass das Sicherungsmittel das Arbeitsgerät freigibt, wenn durch den Sensor eine Berührung mit einem Hindernis oder eine Annäherung an ein Hindernis ermittelt wird. Bei einem derartigen Sensor kann es sich um einen mechanischen, induktiven, optischen Sensor, einen Radarsensor oder jeden anderen geeigneten Sensor handeln. Der Sensor kann statt eines Freigebens der Arbeitseinheit oder zusätzlich bewirken, dass ein Betrieb der Arbeitseinheit in Abhängigkeit von der Bedingung unterbunden wird, um somit beispielsweise einer Beschädigung von Arbeitsmitteln, wie Mähmessern o,ä., oder auch einer Beschädigung des Untergrundes durch diese Arbeitsmittel, entgegenzuwirken, wenn die Arbeitseinheit auf ein Hindernis trifft und diesem ausweicht. Es kann alternativ oder zusätzlich auch vorgesehen sein, dass der Sensor eine Warneinrichtung, beispielsweise eine optische Anzeige oder eine akustische Signaleinrichtung, aktiviert, wenn ein Hindernis herannaht bzw. die Arbeitseinheit auf ein solches trifft.

Fahrzeuge können mit einem derartigen Arbeitsgerät oder auch mit mehreren Arbeitsgeräten versehen sein. Bei dem Fahrzeug kann es sich insbesondere um ein landwirtschaftliches Arbeitsfahrzeug oder Mähgerät oder auch um ein Gerät zur Rasen-, Garten- bzw. Grundstückspflege handeln.

Besonders günstig ist eine erfindungsgemäße Ausbildung, wenn das Arbeitsgerät in einem Seitenbereich des Fahrzeugs angeordnet ist, da ein solches sowohl frontal als auch seitlich auf ein Hindernis auftreffen kann, und durch eine erfindungsgemäße Ausbildung die Gefahr eines Zusammentreffens mit den Rädern des Fahrzeugs verringert wird.

In der Zeichnung ist ein nachfolgend näher beschriebenes Ausführungsbeispiel der Erfindung dargestellt. Es zeigt:
- Fig. 1: eine Draufsicht auf ein Fahrzeug, an welches drei Arbeitsgeräte angeschlossen sind,
- Fig. 2: eine perspektivische Ansicht des bezogen auf die übliche Fahrtrichtung des Fahrzeugs rechten Arbeitsgeräts von vorn und rechts betrachtet,
- Fig. 3: eine vergrößerte Darstellung einer Halterung und einer Arbeiteinheit einer ersten bzw. zweiten Ausführungsform in unverbundenem Zustand,
- Fig. 4: eine vergrößerte Darstellung entsprechend Fig. 3 in montiertem Zustand,
- Fig. 5: eine weitere Ausführungsform einer Haltung bzw. eines Arbeitsgeräts und
- Fig. 6: eine Darstellung des Arbeitsgeräts aus Fig. 5 von vorn betrachtet.

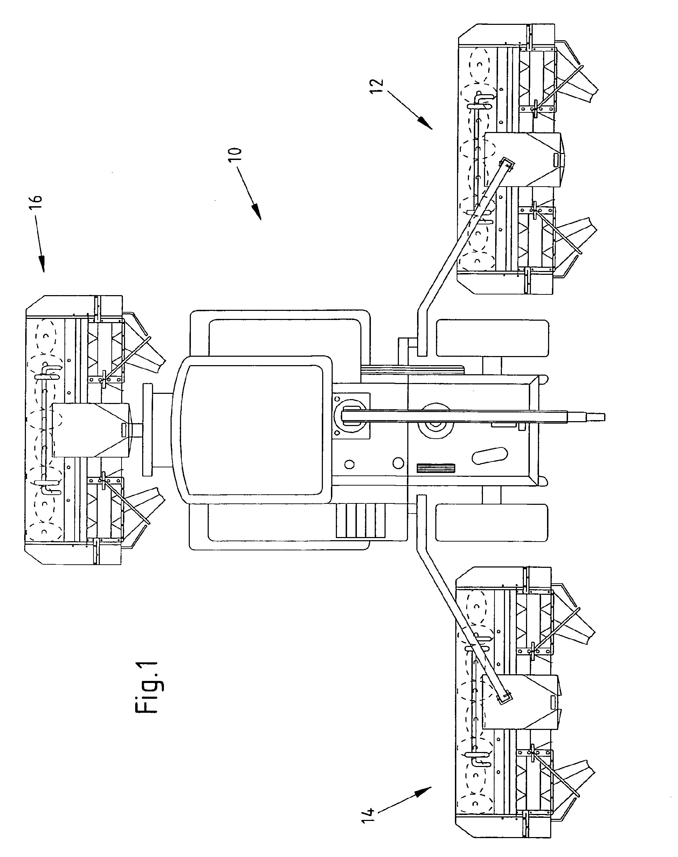

Es wird im Folgenden zuerst auf die Fig. 1 Bezug genommen, welche ein Fahrzeug 10 zeigt, an welches drei Arbeitsgeräte 12, 14, 16 angeschlossen sind.

Bei dem Fahrzeug 10 handelt es sich um ein selbstfahrendes Erntefahrzeug in der Art eines Feldhäckslers, wie er allgemein bekannt ist. Es kommen aber auch die Verwendung anderer Fahrzeuge, wie beispielsweise von Traktoren etc. in Betracht, die eine Möglichkeit zum Anbau von Arbeitsgeräten bieten.

Zwei der an dem Fahrzeug 10 angebrachten Arbeitsgeräte 12, 14 sind an den Seiten und ein Arbeitsgerät 16 ist in einem Frontbereich des Fahrzeugs 10 vorgesehen. Bei den Arbeitsgeräten 12, 14, 16 kann es sich um Mähwerke, Knick- oder Schlagzetter, Mähknick- bzw. Mähschlagzetter oder auch um einen Mähbalken handeln. Auch andere landwirtschaftliche Geräte, beispielsweise solche zur Bodenbearbeitung etc. oder auch Geräte zur Rasen-, Garten- und Grundstückspflege sind denkbar.

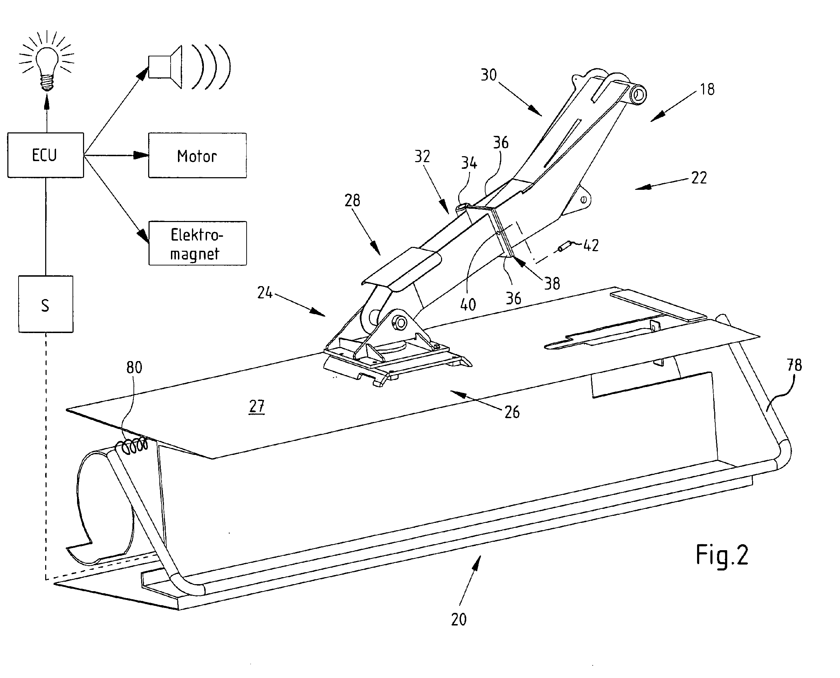

Im Folgenden soll nur noch auf das bezogen auf die übliche Fahrtrichtung des Fahrzeugs 10 rechte Arbeitsgerät 12 Bezug genommen werden, welches in Fig. 2 vergrößert dargestellt wird.

Das Arbeitsgerät 12 weist eine Halterung 18 sowie eine Arbeitseinheit 20 auf.

Die Halterung 18 umfasst einen Tragarm 22, welcher einenends über eine Anbaueinrichtung 24 an einem zentralen Bereich 26 der Arbeitseinheit 20 angreift und andernends gelenkig bzw. um eine zumindest im Wesentlichen horizontale Achse, welche sich bezogen auf das Fahrzeug 10 in Längsrichtung erstreckt, schwenkbar mit dem Fahrzeug 10 verbindbar ist.

Die Arbeitseinheit 20 wiederum weist ein Gehäuse 27 auf, in welchem nicht bzw. nur andeutungsweise dargestellte Arbeitswerkzeuge, wie beispielsweise Mähscheiben, Quetscheinrichtungen etc. angeordnet sind.

Der Tragarm 22 ist zweiteilig ausgebildet und weist einen ersten der Arbeitseinheit 20 zugewandten Teil 28 und einen zweiten dem Fahrzeug 10 zugewandten Teil 30 auf. Die Teile 28 und 30 sind miteinander mittels eines Scharniers 32 verbunden.

Das Scharnier 32 weist eine im Wesentlichen senkrechte Schwenkachse 34 auf, welche sich in einem bezogen auf die Vorwärtsfahrtrichtung des Fahrzeugs 10 hinten liegenden Bereich des Tragarms 22 angeordnet ist, und von welcher sich Scharnierflügel 36 weg erstrecken.

Das Scharnier 32 ist darüber hinaus derart ausgebildet, dass es bzw. seine Scharnierflügel 36 zumindest in einem der Schwenkachse 34 gegenüberliegenden Bereich 38 über den Tragarm 22 hinausragt/hinausragen. In dem Bereich 38 sind in den Scharnierflügeln 36 fluchtende Bohrungen 40 vorgesehen. In diese Bohrungen 40 kann ein als Bolzen ausgeführtes Sicherungsmittel 42 eingesetzt werden (welches zur Verdeutlichung in demontiertem Zustand dargestellt wird). Ein derartiges Sicherungsmittel 42 weist üblicherweise eine Sollbruchstelle auf, welche bei einem Erreichen bzw. Überschreiten einer vorgegebenen Belastung abreißt.

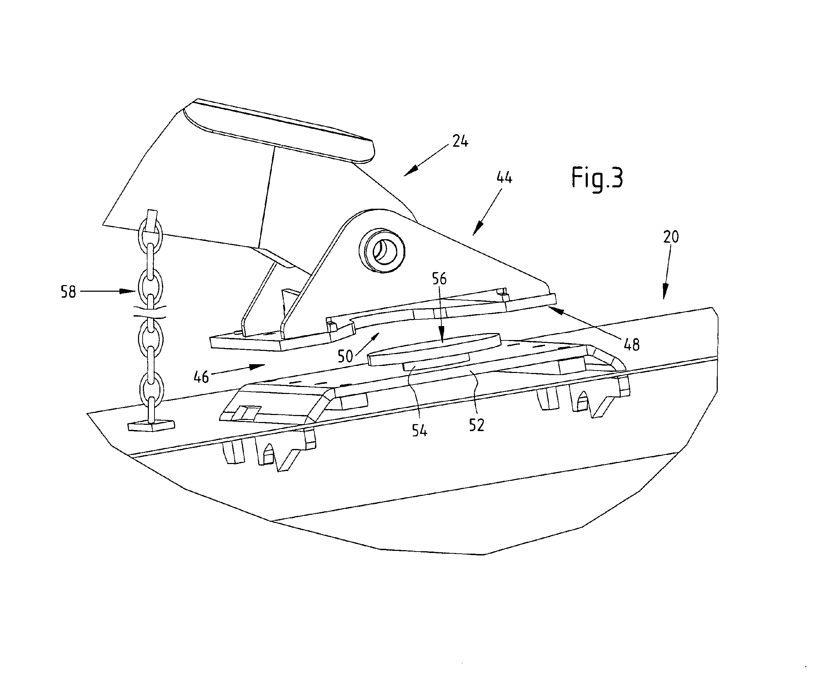

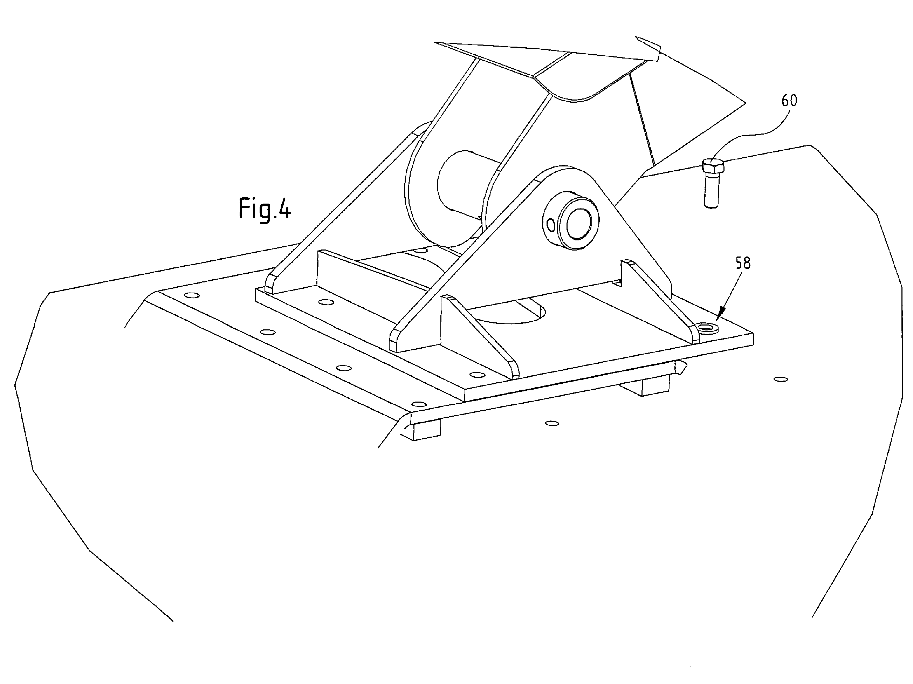

Im Folgenden soll nun genauer auf die Anbaueinrichtung 24 eingegangen werden, welche den Tragarm 22 mit der Arbeitseinheit 20 verbindet und welche in den Fig. 3 und 4 genauer dargestellt ist.

Es wird nun zuerst auf Fig. 3 Bezug genommen, in der ein der Arbeitseinheit 20 zugewandter Teil 28 des Tragarms 22 dargestellt ist. Der Teil 28 bildet in seinem Endbereich 44 eine Klaue 46. Diese Klaue 46 weist eine der Arbeitseinheit 20 zugewandte, zumindest im Wesentlichen ebene Unterseite 48, sowie einen zentral angeordneten Schlitz 50 auf, welcher in einem bezogen auf das Fahrzeug 10 rückwärtigen Bereich geöffnet und in einem vorderen Bereich geschlossen ausgebildet ist.

An der Arbeitseinheit 20 wiederum ist eine Konsole 52 vorgesehen, von der sich ein Bolzen 54 in Richtung des Tragarms 22 erstreckt, welcher einen verbreiterten Kopfbereich 56 aufweist.

Der Bolzen 54 und der Kopfbereich 56 sind derart dimensioniert, dass der Bolzen 54 in den Schlitz 50 eingeführt werden und sich in diesem frei bewegen kann, die Größe des Kopfbereichs 56 aber die des Schlitzes 50 derart übersteigt, dass der Bolzen 54 den Schlitz 50 in axialer Richtung nicht verlassen kann, sondern statt dessen in diesem wie in einer Schiene geführt wird.

Fig. 4 zeigt den Tragarm 22 und die Konsole 52 aus Fig. 3 von der gegenüberliegenden Seite betrachtet. Aus dieser Abbildung wird deutlich, dass in der Klaue 46 eine Bohrung 58 vorgesehen ist. Diese Bohrung 58 fluchtet, wenn der Bolzen 54 vollständig in den Schlitz 50 eingeführt und die Klaue 46 und die Arbeitseinheit 20 entsprechend ausgerichtet sind, mit einer nicht gezeigten Bohrung in der Konsole 52. In diese Bohrungen ist im Betrieb ein in der Zeichnung aus Gründen der Klarheit separat dargestelltes als Scherbolzen ausgeführtes Sicherungsmittel 60 eingesetzt, das derart ausgebildet ist, dass es bei einem Auftreten einer vorgegebenen Querkraft abschert.

Im Folgenden soll nun auf die Wirkungsweise der Halterung 18 genauer eingegangen werden.

Wenn das Fahrzeug 10 betrieben wird, indem sich die Arbeitseinheit 20 in einer knapp über den Boden abgesenkte Stellung befindet und durch das sich in Vorwärtsrichtung bewegende Fahrzeug 10 über diesen geführt wird, kann es vorkommen, dass die Arbeitseinheit 20 auf ein Hindernis trifft. Bei einem derartigen Hindernis kann es sich beispielsweise um einen Stein, einen niedrigen Zaun, Wurzelwerk o.ä. handeln, welches von einer Bedienungsperson bzw. einem Fahrer des Fahrzeugs 10 nicht gesehen und daher nicht umfahren wurde. Durch ein solches Zusammentreffen könnte es bei einer starren Befestigung der Arbeitseinheit 20 an dem Tragarm 22 zu Beschädigungen einer oder auch beider Komponente(n) kommen.

Durch die erfindungsgemäße Ausführung der Halterung 18 wird derartigen Beschädigungen entgegengewirkt. Trifft die Arbeitseinheit 20 frontal oder auch schräg auf ein Hindernis, so werden auf die Sicherungsmittel 42 und 60 Kräfte ausgeübt. Überschreiten diese Kräfte einen vorgegebenen bzw. durch die Auslegung der Sicherungsmittel 42 und 60 vorgegebenen Betrag, so schert bzw. reißt eines der Sicherungsmittel 42, 60 oder auch beide Sicherungsmittel 42 und 60 ab.

Durch ein Abscheren des an dem Scharnier 32 vorgesehenen Sicherungsmittels 42 werden die Scharnierflügel 36 in ihrem der Schwenkachse 34 gegenüberliegenden Bereich 38 durch diesen nicht mehr länger zusammengehalten. Auf diese Weise ist es möglich, dass der der Arbeitseinheit 20 zugewandte Teil 28 des Tragarms 22 durch die durch das Auftreffen auf das Hindernis ausgewirkte Kraft zusammen mit der Arbeitseinheit 20 nach rückwärts schwenkt.

Ein Abscheren des zweiten Sicherungsmittels 60, welches die Klaue 46 mit der Konsole 52 verbindet, bewirkt, dass sich der Bolzen 54 in dem Schlitz 50 sowohl drehen als auch nach rückwärts verschieben und sogar aus dem Schlitz 50 austreten kann.

Ein Drehen des Bolzens 54 in dem Schlitz 50 und somit der Arbeitseinheit 20 mit Bezug auf den Tragarm 22 kann erfolgen, wenn das Arbeitsgerät 12 mit einem Seitenbereich auf ein Hindernis auftrifft. Auf diese Weise kann die Arbeitseinheit 20 drehen bzw. schwenken und dem Hindernis ausweichen.

Bei einem frontalen Auftreffen der Arbeitseinheit 20 auf ein Hindernis wird sich der Bolzen 54 in dem Schlitz nach rückwärts verschieben, wodurch einer Beschädigung der Arbeitseinheit 20 bzw. des Tragarms 22 oder anderer Bauteile entgegengewirkt wird. Wird der Zusammenstoß durch die Bedienungsperson nicht sofort bemerkt und/oder weicht das Hindernis nicht ausreichend aus, so kann der Bolzen 54 aus dem Schlitz 50 austreten, wodurch die Arbeitseinheit 20 von dem Hindernis frei wird. Es ist hierbei denkbar, dass die Arbeitseinheit 20 sich vollständig von dem Tragarm 22 löst; vorzugsweise ist aber eine Verliersicherung, beispielsweise in der Art einer in Fig. 4 dargestellten Kette 58, welche einenends mit der Arbeitseinheit 20 und andernends mit dem Tragarm 22 verbunden ist, vorgesehen.

In beiden Fällen wird die Arbeitseinheit 20 nach einem solchen Zwischenfall durch eine Bedienungsperson durch ein Einsetzen eines oder mehrerer intakter Sicherungsmittel 42, 60 wieder betriebsbereit gemacht.

Um die erfindungsgemäße Wirkung zu erzielen, ist es sowohl denkbar, wie in dem gezeigten Beispiel, eine scharnierartige und auch eine klauenartige Befestigung, als auch nur eine der beiden Befestigungsarten vorzusehen.

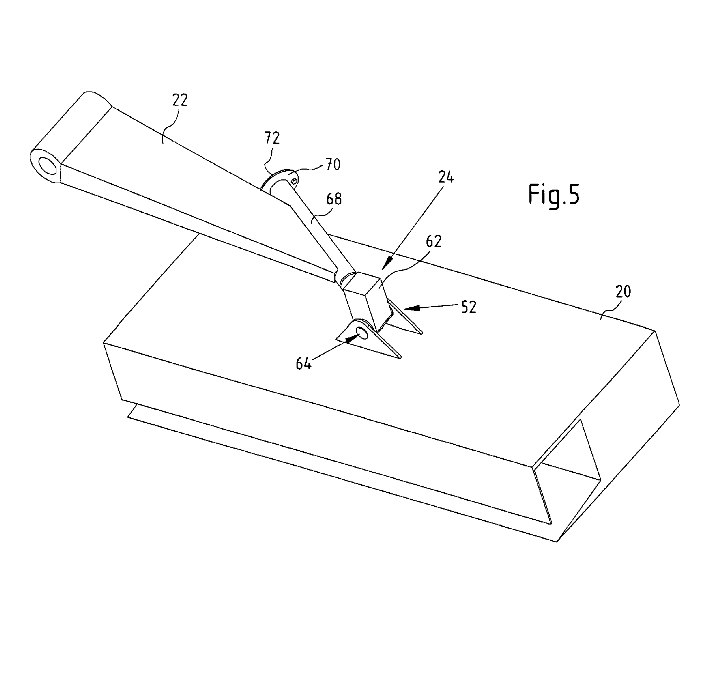

Es wird nun auch auf Fig. 5 Bezug genommen, in der eine weitere Ausführungsform gezeigt wird. Für Bauteile, welche den in den zuvor beschriebenen Ausführungsbeispielen gezeigten entsprechen, werden dieselben Bezugszeichen verwenden.

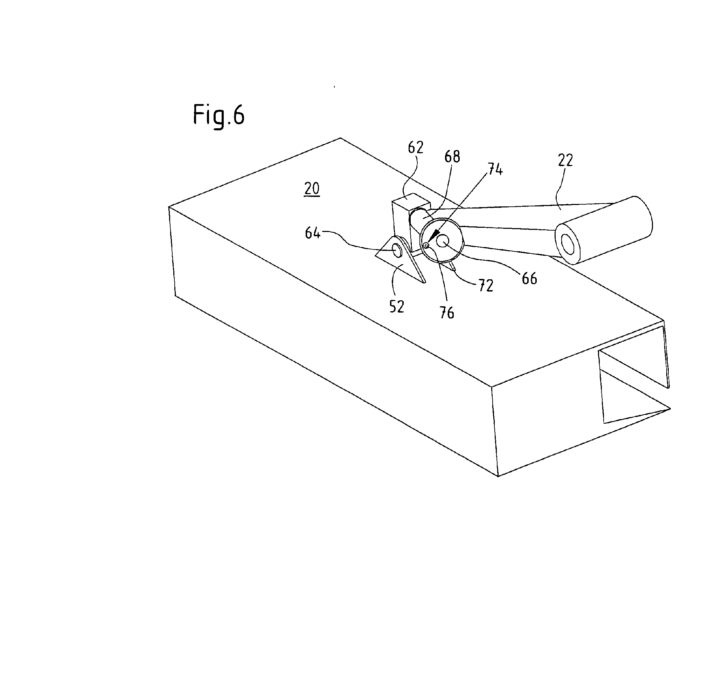

Es wird eine Arbeitseinheit 20 gezeigt, welche über eine Halterung 18 an ein Fahrzeug 10 (siehe Fig. 1) angeschlossen werden kann. Die Arbeitseinheit ist mittels einer Anbaueinrichtung 24 an einem Tragarm 22 angebracht. Die Anbaueinrichtung 24 weist eine Konsole 52, welche fest mit der Arbeitseinheit 20 verbunden ist, und ein Gehäuse 62 auf, welches mit der Konsole 52 über einen Schwenkbolzen 64 gelenkig verbunden ist. An dem Gehäuse 62 ist ein Achsbolzen 66 (siehe Fig. 6) drehfest vorgesehen, auf welchen eine mit dem Tragarm 22 fest verbundene Hülse 68 drehbar aufgesetzt ist.

Es wird im Folgenden auch auf Fig. 6 Bezug genommen, in der die Arbeitseinheit 20 aus Fig. 5 von vorn betrachtet wird.

Sowohl die Hülse 68 als auch der Achsbolzen 66 weisen in ihren der Arbeitseinheit 20 abgewandten Bereichen eine drehfest verbundene Scheibe 70 bzw. 72 auf.

In beiden Scheiben 70, 72 sind Bohrungen 74 (nur andeutungsweise gezeigt) vorgesehen, welche im Betrieb miteinander fluchten und durch die ein als Scherbolzen ausgebildetes Sicherungsmittel 76 aufgenommen wird.

Sowohl aus Fig. 5 als auch Fig. 6 wird deutlich, dass der Achsbolzen 66 und somit eine Schwenkachse der Arbeitseinheit 20 mit Bezug auf den Tragarm 22 sowohl horizontal als auch vertikal quer zur Fahrtrichtung geneigt ist.

Trifft die Arbeitseinheit 20, wie es zuvor beschrieben wurde, auf ein Hindernis, können die auftretenden Kräfte dazu führen, dass das Sicherungsmittel 76 abschert. Auf diese Weise wird die Verbindung zwischen den Scheiben 70, 72 gelöst, wodurch die Arbeitseinheit 20 gegenüber dem Tragarm 22, durch die nun gelenkige Verbindung des Achsbolzens 66 und der Hülse 68, schwenken kann.

Da der Achsbolzen 66 und somit die Schwenkachse geneigt vorgesehen ist, kann die Arbeitseinheit 20 dem Hindernis sowohl nach oben als nach hinten ausweichen und wird, nachdem sie von dem Hindernis freigeworden ist, durch die Wirkung ihres Eigengewichts wieder in ihre Ausgangslage zurückkehren. Wie auch bei den beiden anderen Ausführungsformen muss nach einem solchen Ereignis nur das Sicherungsmittel 76 durch eine Bedienungsperson ersetzt werden, um die Arbeitseinheit 20 wieder vollständig betriebsbereit zu machen.

Im Folgenden wird nochmals Bezug auf Fig. 2 Bezug genommen, durch die eine weitere Abwandlung der Erfindung verdeutlicht werden soll.

An der Arbeitseinheit 20 ist ein Kontaktbügel 78 vertikal schwenkbar vorgesehen und erstreckt sich über die gesamte Breite der Arbeitseinheit 20. Der Kontaktbügel 78 ist derart vorgesehen, dass er bei Kontakt mit einem Hindernis u.ä. in Richtung der Arbeitseinheit 20 verschwenkt werden kann. In seiner unbetätigten Betriebsstellung, welche in Fig. 2 dargestellt wird, kann er beispielsweise mittels eines nicht dargestellten Anschlags, welcher eine Bewegung von der Arbeitseinheit 20 weg begrenzt, gehalten werden. In Anlage an diesem Anschlag wird der Kontaktbügel 78 beispielsweise durch die Wirkung einer nur andeutungsweise dargestellten Feder 80 gehalten.

Ein derartiger Kontaktbügel 78 kann mit einem Sensor S verbunden sein, welcher aufnimmt, dass der Kontaktbügel 78 und somit die Arbeitseinheit 20 auf ein Hindernis getroffen ist. Der Kontaktbügel 78 kann durch eine Feder 80 oder ein ähnliches Element in Richtung einer unbetätigten Stellung belastet werden.

Ein derartiges Ausgabesignal des Sensors S kann zur Bewirkung unterschiedlicher Funktionen verwendet werden. Es kann vorgesehen sein, dass in Abhängigkeit von dieser Ausgabe eine optische Anzeige oder ein akustisches Warnsignal an eine Bedienungsperson geliefert wird, so dass diese von dem Ereignis Kenntnis erlangt. Der Sensor S kann sein Ausgabesignal aber auch an eine elektronische Steuereinheit liefern, welche in Abhängigkeit von diesem Signal den Antrieb des Fahrzeugs 10 oder den Antrieb der betroffenen Arbeitseinheit 20 oder auch aller Arbeitseinheiten 20 deaktiviert.

Darüber hinaus kann aber auch vorgesehen sein, dass die Halterung 18 derart ausgebildet ist, dass die Sicherungsmittel 42, 60, 76 durch einen elektrisch betätigten Stift, einen Elektromagneten etc. gebildet werden, welcher bei einem ein Hindernis anzeigenden Signal des Sensors S eine Verbindung zwischen der Arbeitseinheit 20 und dem Tragarm 22 freigibt.

Alle diese Funktionen können einzeln oder in Kombination verwendet werden.

## Patentansprüche

1. Halterung (18) mit einem Tragarm (22), zur Verbindung einer Arbeitseinheit (20) mit einem Fahrzeug (10), und wenigstens einem Sicherungsmittel (42, 60, 76), welches eine Bewegung der Arbeitseinheit (20) beschränkt, solange eine vorgegebene Bedingung nicht erfüllt ist, **dadurch gekennzeichnet, dass** die Arbeitseinheit (20) an dem Tragarm (22) derart anschließbar ist, dass die Arbeitseinheit (20) mit Bezug auf den Tragarm (22) um wenigstens eine zumindest eine vertikale Komponente aufweisende Achse schwenken kann, welche in einem zumindest im Wesentlichen zentralen Bereich (26) der Arbeitseinheit (20) angeordnet ist, wenn das Sicherungsmittel (42, 60, 76) die Verbindung freigibt.

2. Halterung nach Anspruch 1, **dadurch gekennzeichnet, dass** das Sicherungsmittel (42, 60, 76) die Arbeitseinheit (20) kraft- und/oder formschlüssig festlegen kann, wobei das Sicherungsmittel (42, 60, 76) vorzugsweise in der Art eines Scherelements insbesondere eines Scherbolzens, als ein vorgespanntes insbesondere ein federbelastetes Element oder als ein Elektromagnet ausgebildet ist.

3. Halterung nach Anspruch 1 oder 2, **dadurch gekennzeichnet, dass** es sich bei der Bedingung um eine nicht zu überschreitende Kraft auf die Arbeitseinheit (20) und/oder einen nicht zu unterschreitenden Mindestabstand zwischen der Arbeitseinheit (20) und einem Hindernis handelt.

4. Halterung nach einem oder mehreren der vorherigen Ansprüche, **dadurch gekennzeichnet, dass** die Halterung (18) an der Arbeitseinheit (20) lösbar angreift.

5. Halterung nach einem oder mehreren der vorherigen Ansprüche, **dadurch gekennzeichnet, dass** die Arbeitseinheit (20) von der Halterung (18) verschiebbar aufgenommen wird.

6. Halterung nach Anspruch 4 oder 5, **dadurch gekennzeichnet, dass** die Arbeitseinheit (20) oder der Tragarm (22) einen Zapfen (56) aufweist, der durch einen Schlitz (50) verschiebbar aufgenommen wird, welcher vorzugsweise zumindest einenends offen ausgebildet sein kann und an dem jeweils anderen Bauteil (Arbeitseinheit (20) bzw. Tragarm (22)) vorgesehen ist.

7. Halterung nach Anspruch 6, **dadurch gekennzeichnet, dass** der Zapfen (56) Mittel aufweist, welche einem Austreten des Zapfens (56) aus dem Schlitz (50) in axialer Richtung entgegenwirken.

8. Halterung nach einem oder mehreren der vorherigen Ansprüche, **dadurch gekennzeichnet, dass** die Arbeitseinheit (20) um wenigstens eine zumindest im Wesentlichen horizontale Achse schwenken kann.

9. Halterung nach einem oder mehreren der vorherigen Ansprüche, **dadurch gekennzeichnet, dass** der Tragarm (22) zumindest zwei mittels eines Scharniers (32) verbundene Teile (28, 30) aufweist, welche um eine eine vertikale Komponente aufweisende Achse schwenkbar verbunden sind, wobei vorzugsweise das Sicherungsmittel (42, 60, 76) ein Schwenken des Scharniers (32) unterbinden kann.

10. Arbeitsgerät (12), insbesondere ein gezogenes, geschobenes oder angehängtes landwirtschaftliches Gerät, mit wenigstens einer Arbeitseinheit (20), welche über eine Halterung (18) nach einem oder mehreren der vorherigen Ansprüche mit einem Fahrzeug (10) verbunden werden kann.

11. Arbeitsgerät nach Anspruch 10, **gekennzeichnet durch** einen Annäherungs- bzw. Berührungssensor.

12. Arbeitsgerät nach Anspruch 11, **dadurch gekennzeichnet, dass** der Annäherungs- bzw. Berührungssensor derart auf die Verbindung wirkt, dass diese in Abhängigkeit von der Bedingung gelöst wird und/oder dass der Annäherungs- bzw. Berührungssensor derart mit einem Antrieb des Arbeitsgerät (12) zusammenwirken kann, dass ein Betrieb der Arbeitseinheit (20) unterbunden wird und/oder dass der Annäherungs- bzw. Berührungssensor mit einer Warneinrichtung zusammenwirkt.

13. Fahrzeug (10), insbesondere ein landwirtschaftliches Erntefahrzeug bzw. ein Mähgerät, mit wenigstens einem Arbeitsgerät (12) nach einem oder mehreren der Ansprüche 10 bis 13.

14. Fahrzeug nach Anspruch 13 mit mehreren Arbeitsgeräten, wobei vorzugsweise ein Arbeitsgerät in einem Seitenbereich des Fahrzeugs (10) angeordnet ist.
